# EUROPEAN PATENT APPLICATION

(11) **EP 4 159 046 A1**
(43) Date of publication of application: **05.04.2023**
(21) Application number: 22189503.0
(22) Date of filing: 28.04.2016
(51) Int. Cl.: A23K 10/20, A23K 10/26, A23K 20/147, A23K 40/00, A23K 50/40, A23K 50/48

(54) **WET PET FOOD PRODUCT COMPRISING A MEAT ANALOGUE**

(30) Priority: 28.04.2015 EP 15165399
(62) Divisional of application: 16787154.0
(71) Applicant: Mars, Incorporated, McLean, VA 22101 (US)
(72) Inventor: MAO, Mathieu, 27283 Verden (DE); BECKMANN, Christoph Hendrik, 27283 Verden (DE); PANNEVIS, Marinus, 27283 Verden (DE); OLIVARES, Alicia, 27283 Verden (DE); SCHUETZ, Nadine, 27283 Verden (DE)
(74) Representative: Carpmaels & Ransford LLP

(57) **Abstract**

A wet pet food product is provided comprising 20-100 wt.% of meat analogue and 0-80 wt.% of a sauce, said meat analogue comprising:
• 10-60 wt.% protein, at least 40 wt.% of said protein being non-animal protein;
• 30-90 wt.% water;
• 0-15 wt.% starch;
• 0-20 wt.% fat;
wherein, when the meat analogue contains starch, non-animal protein and starch are present in the meat analogue in a weight ratio of non-animal protein to starch that exceeds 1:3 , and wherein the wet food product contains 0.1-3 wt.% of yeast extract. Processes for manufacturing the aforementioned wet pet food product are also provided as is the use of the wet pet food product for feeding a companion animal.

## Description

### FIELD

A wet pet food product is provided, comprising 20-100 wt.% of meat analogue and 0-80 wt.% of sauce (e.g. gravy, jelly or mousse), said wet food product further containing 0.1-3 wt.% of yeast extract. Processes of preparing the aforementioned wet pet food product as well as the use of said wet pet food product for feeding a companion animal are also provided.

### BACKGROUND

Pet food is commonly categorized on the basis of its moisture content:
(1) Dry or low moisture content products (typically less than 15%). These products typically combine high nutritional content with convenience;
(2) Wet or high moisture content products (greater than about 50%). These products are generally most palatable to pets;
(3) Semi-moist or semi-dry or soft dry or intermediate or medium moisture content products (generally between 15 and 50%).

Two main types of wet pet food products are distinguished. The first type is known as 'paté' or 'loaf and is typically prepared by processing a mixture of edible components under heat to produce a homogeneous semi-solid mass that is structured by heat-coagulated protein. This homogeneous mass is usually packaged into single serve or multi serve packaging which is then sealed and sterilized. Upon packing, the homogeneous mass assumes the shape of the container.

The second type of wet pet food is known as 'chunk and gravy', 'chunk and jelly' or 'chunk and mousse', depending on the nature of the sauce component. These types of products are referred to herein as 'chunk and sauce' products. The chunks comprise meat pieces or restructured meat pieces. Restructured meat pieces are typically prepared by making a meat emulsion containing a heat-settable component, and by applying thermal energy to 'set' the emulsion and allowing it to assume the desired shape, usually after cutting. The product pieces are combined with a sauce (e.g. gravy, jelly or mousse) in single serve or multi serve packaging which is then sealed and sterilized.

Many wet pet food products contain considerable amounts of meat and animal by-products. Animal by-products are the entire bodies or parts of bodies of animals or products of animal origin not intended for human consumption, including ova, embryos and sperm. Animal by-products include, among others, carcasses, body parts of animals, viscera and products or foods of animal origin originally meant for human consumption but withdrawn for commercial reasons.

Wet pet food products containing meat analogues are also known. These meat analogues usually contain a combination of meat/animal by-products and vegetable protein, e.g. gluten or soy protein.

Meat analogues have a physical structure similar to that of meat and high nutritional quality. Meat analogues having a fibrous structure similar to that found in muscle meat are typically produced by process that comprises mixing ground meat/animal by-products with vegetable protein (e.g. gluten), extruding the mixture at very high temperatures and cutting the extruded mixture into pieces of meat analogue. The use of meat analogues in pet food can reduce costs and/or improve the overall nutritional profile of the final product. Unfortunately, however, meat analogues often do not have the desired innate palatability, especially if the meat analogue has a high vegetable protein content.

WO 00/69276 describes a method of manufacturing a meat analogue by extruding a mixture containing:
- about 40 to 95% by weight edible proteinaceous materials selected from the group consisting of predetermined mixtures of defatted soy flour, soy meal, soy concentrate, cereal gluten in vital or starch-containing form and egg white, and
- up to about 7% by weight of edible mineral binding and cross-linking compounds;
to obtain a plurality of extrudate shreds that resemble in consistency and texture flaked or shredded meat.

WO 2004/016097 describes a method of manufacturing a texturized proteinaceous meat analogue having a relative water activity of less than about 0.8. The meat analogue comprises proteinaceous materials selected from the group consisting of defatted soy flour, soy meal, soy concentrate, cereal gluten (in vital or starch containing form) and egg white powder, edible binding and cross-linking compounds, and a humectant of glycerol and glucose. The mixture is converted into hot lava, extruded and cooled.

WO 2009/003721 describes a method for producing an extruded food product comprising from 25-77% meat and vegetable protein comprising:
- continuously introducing components of the food product to an extruder wherein the components include meat and vegetable protein; mixing the components to produce a mixture in the extruder;
- heating the mixture in the extruder to produce the food product;
- extruding the food product from the extruder through the extruder die; and
- cooling the food product.
Example 1 of WO 2009/003721 describes a wet pet food product comprising from about 25% to about 75% meat and about 15% to about 35% vegetable protein in the form of wheat gluten.

WO 2012/050603 describes a method for making meat emulsion products having a meat-like appearance and texture comprising:
- forming a meat emulsion containing protein and fat;
- comminuting and heating the meat emulsion to a temperature of from 132 to 160°C;
- further heating the meat emulsion to a temperature of 160 to 240°C;
- introducing the emulsion into a confined processing zone;
- subjecting the meat emulsion to a pressure of from about 100 to about 1200 psi; and
- discharging the meat emulsion from the confined processing zone.
The meat emulsion may contain 5-35% functional proteins, such as wheat gluten and soy proteins.

It is known in the art to employ yeast extract in pet food.

EP-A 0 241 097 describes a liquid food product on dairy basis for cats comprising 1.5-3.5% by weight of lactose and 3.5-5.0% by weight of protein based on the total product, and fat. The examples of the European patent application describe liquid food products containing yeast extract.

US 4,070,490 describes a process for preparing a liver-like pet food which comprises:
- preparing an aqueous reaction mixture of emulsified fat, whole blood, and a reducing sugar; and
- heating the reaction mixture for a time and at a temperature effective to solidify the mixture and produce a textured, liver-like material.
The examples describe the preparation of live-like pet food from a mixture comprising tallow, water, dried blood, glucose and yeast extract.

JP3206853 describes the preparation of pet food kibbles by extruding a composition containing cereal flours, meat meal, fish meal, wheat germ, brewer's yeast, vitamins, minerals and water; drying the extrudate; and coating the dried extrudate with beef tallow and yeast extract.

US 2011/0159149 describes a palatability enhancing composition that can be applied to a surface of a companion animal food, said composition comprising at least one palatant and/or at least one tastant modified by glycerol and/or propylene glycol. The palatant may be selected from the group consisting of phosphates, pyrophosphates, proteins, protein hydrolysates, biological extracts, dried yeast, yeast extracts, peptones and combinations thereof.

JP 2004/121022 describes a pet food composition that contains, as an active ingredient, yeast extract to which flavour is imparted by heating at proper temperatures (70-100 °C).

Ogoshi et al., Acidifying and yeast extract in diets for adults cats, Animal Science Journal (2014) 85, 555-561 describe the outcome of a study in which the authors evaluated the effects of adding an acidifying agent based on phosphoric acid (A), a yeast extract from a specific strain (*Saccharomyces cerevisiae*) (Y) and the combination of these two additives in food for adult cats. Results of this study showed that the isolated use of 0.6% A or 1.5% Y in diets for cats is not recommended. However, the association of these two additives was beneficial in increasing nutrient digestibility.

Teshima et al. (Yeast extract in dogs feeding: digestibility and palatability, 44th Annual meeting of the Brazilian Zootechny Society, Unep-Jaboticabal 24-27 July 2006) describe the outcome of experiments in which 2% yeast extract (Nupro^{®} 2000) was added to extruded dog food to replace corn gluten. Dogs were found to prefer the yeast extract containing product over the reference product.

WO 2014/098193 describes a pet food comprising:
- at least one kind of protein selected from the group consisting of animal proteins and vegetable proteins;
- at least one kind of fat or oil selected from the group consisting of animal fats and oils and vegetable fats and oils;
- defatted sesame; and
- at least one kind of palatability enhancing agent selected from the group consisting of meat extracts, fish extracts, internal organ extracts, yeast extracts, processed milk products and hydrolysates thereof.

### SUMMARY OF THE INVENTION

The wet pet food products provided herein contain a meat analogue with a high level of non-animal protein. Surprisingly, despite the high level of non-animal protein in the meat analogue, these products have excellent palatability due to the addition of a small quantity of yeast extract.

In one aspect, a wet pet food product is provided comprising 20-100 wt.% of meat analogue and 0-80 wt.% of a sauce, said meat analogue comprising:
- 10-60 wt.% protein, at least 40 wt.% of said protein being non-animal protein;
- 30-90 wt.% water;
- 0-15 wt.% starch;
- 0-20 wt.% fat;
wherein non-animal protein and starch are present in the meat analogue in a weight ratio of non-animal protein to starch that exceeds 1:3, and wherein the wet pet food product contains 0.1-3 wt.% of yeast extract. The yeast extract may be obtained from different types of yeast, such as *Saccharomyces, Pichia, Kluyveromyces, Hansenula, Candida.* Desirably, the yeast extract is obtained from a *Saccharomyces* yeast, and in some embodiments, is obtained from *Saccharomyces cerevisiae.*

Unexpectedly, it was found that incorporation of small quantities of yeast extract in wet pet food products containing substantial quantities of meat analogue brings the palatability of such pet food products closer to that of wet pet food products made from meat/animal by-products and without, or a lower amount of, meat analogue. The improved palatability of the wet pet food products can suitably be demonstrated in a test wherein the total amount of eaten product is monitored and compared to suitable reference products.

In another aspect, the use of the aforementioned wet pet food product for feeding a companion animal, e.g. a cat or dog, is provided.

A process of manufacturing the aforementioned wet pet food product is also provided, said process comprising preparing a meat analogue by:
- mixing a source of non-animal protein with one or more other pet food components to provide a proteinaceous mass containing 10-40 wt.% non-animal protein, 30-90 wt.% water and 1-50 wt.% of one or more other edible ingredients;
- heating the proteinaceous mass to a temperature of at least 110°C for 0.1 to 5 minutes to coagulate the non-animal protein; and
- shaping the heated mass into pieces of meat analogue.

### DETAILED DESCRIPTION

A wet pet food product is provided comprising 20-100 wt.% of meat analogue and 0-80 wt.% of a sauce, said meat analogue comprising:
- 10-60 wt.% protein, at least 40 wt.% of said protein being non-animal protein;
- 30-90 wt.% water;
- 0-15 wt.% starch;
- 0-20 wt.% fat;
wherein the non-animal protein and starch are present in the meat analogue in a weight ratio of non-animal protein to starch that exceeds 1:3, and wherein the wet food product contains 0.1-3 wt.% of yeast extract. The wet pet food product may suitably comprise, consist essentially of, or consist of a meat analogue and yeast extract. The wet pet food product may also suitably comprise, consist essentially of, or consist of a meat analogue, a sauce and yeast extract.

The wet pet food product described herein may suitably be prepared without any ingredient or component which is not specifically disclosed herein.

The term "pet" as used herein refers to a domestic animal, including companion animals such as domestic cats and dogs.

The term "pet food" as used herein refers to a food composition designed for ingestion by a pet. The wet pet food product described herein typically is a nutritionally balanced food product to provide a pet with all the essential nutrients it needs in the right quantities. The wet pet food product may also be part of nutritionally balanced pet food product that contains one or more further pet food components (e.g. a granulate), and wherein the wet pet food product together with these one or more further pet food components provide a nutritionally balanced product.

The term "meat analogue" as used herein refers to a shaped product that comprises non-animal proteins, and that has a texture similar to that of pieces of animal meat.

The term "sauce" as used herein refers to an aqueous composition in the form of a fluid, a paste, a gel or a mousse.

The term "animal protein" as used herein refers to proteins that originate from vertebrates, such as mammals, fowl and fish. Animal protein may originate, for example, from muscle meat, organs, tendons or bone. Proteins originating from milk or eggs are not considered animal proteins.

The term "non-animal protein" as used herein refers to proteins that are not animal protein. Examples of non-animal protein, include vegetable proteins, algal proteins, egg proteins, milk proteins, microbial proteins and insect proteins.

The term "starch" as used herein refers to a polysaccharide that is composed of amylose and amylopectin.

The term "fat" as used herein refers to esters of fatty acids such as triglycerides, diglycerides, monoglycerides and phospholipids.

The term "yeast extract" as used herein refers to a yeast product made by extracting the cell contents from yeast (removing the cell walls).

The term "legume" as used herein refers to a plant in the family *Fabaceae* (or *Leguminosae*)*,* or the fruit or seed of such a plant. Well-known legumes include alfalfa, clover, peas, beans, lentils, lupins, mesquite, carob, soybeans, peanuts, and tamarind.

The term "coagulate" as used herein in relation to non-animal protein refers to the denaturation of such non-animal protein, resulting in structure-forming interactions between molecules of non-animal protein. Coagulation of proteins may be brought about by a variety of processes, e.g. by heating or by the action of acids, alkalies, salts, alcohol, mechanical agitation, radiation, and ultra-sonic vibrations.

The wet pet food products and the components used therein are selected for consumption by a pet and are not intended for consumption by humans. The wet pet food product preferably is a wet pet food product for cats or dogs. Most preferably, the wet pet food product is a wet pet food product for cats.

The wet pet food product may solely consist of meat analogue. In that case, the yeast extract is a component of the meat analogue. In other embodiments, the wet pet food product comprises a meat analogue in combination with sauce, and in such embodiments, the yeast extract may be a component of the meat analogue and/or the sauce. Typically, the bulk of the components present in the yeast extract will end up in both the meat analogue and the sauce independent of whether the yeast extract was initially incorporated in the meat analogue or the sauce.

The meat analogue that is contained in the wet pet food product preferably is solid or semi-solid, most preferably semi-solid. The meat analogue typically has a density of 0.8-1.2 g/ml, more preferably of 0.85-1.15 g/ml and most preferably of 0.9-1.1 g/ml.

According to one embodiment, the meat analogue comprises a plurality of elongate strands of fibers that are arranged in bundles. This fibrous structure provides a very realistic meat-like texture and appearance. A meat analogue having a fibrous structure may be produced by methods known in the art, e.g. the methods described in EP-A 1 231 846 and WO 00/69276.

The protein content of the meat analogue preferably is in the range of 15-50 wt.%, more preferably of 18-40 wt.% and most preferably of 22-35 wt.%.

The meat analogue in the wet pet food product preferably contains at least 15 wt.% non-animal protein, more preferably at least 18-40 wt.% non-animal protein, most preferably at least 20-35 wt.% non-animal protein.

The non-animal protein is preferably selected from vegetable protein, algal protein, microbial protein, insect protein, egg protein, milk protein and combinations thereof. More preferably, the non-animal protein is selected from vegetable protein, egg protein and combinations thereof. Most preferably, the non-animal protein is vegetable protein.

The vegetable protein is preferably selected from cereal protein (e.g. gluten), legume protein and combinations thereof. More preferably, the vegetable protein is cereal protein. Most preferably the vegetable protein is wheat gluten.

The protein in the meat analogue preferably comprises at least 40% non-animal protein by weight of the total protein contained in the meat analogue. In some embodiments, at least 50 wt.% of the total protein in the meat analogue is non-animal protein by weight of the total amount of protein that is contained in the meat analogue. In yet other embodiments, non-animal protein constitutes at least 60 wt.%, or even at least 70 wt.% of all the protein that is contained in the meat analogue.

The protein in the meat analogue preferably comprises 0-50 % of animal protein by weight of the total amount of protein that is contained in the meat analogue. More preferably animal protein constitutes 5-40 wt.%, most preferably 10-30 % by weight of the total amount of protein that is present in the meat analogue.

The animal protein is preferably selected from muscle meat protein, organ protein and combinations thereof. The animal protein preferably originates from vertebrates selected from mammals, fowl, fish and combinations thereof; most preferably selected from cattle, pigs, sheep, goat, rabbit, poultry, fish and combinations thereof.

The meat analogue preferably contains less than 12 wt.% starch, more preferably less than 10 wt.% starch, most preferably less than 8 wt.% starch.

The non-animal protein employed may suitably originate from vegetable sources. Examples of sources of non-animal protein that can be used include vegetable protein or vegetable protein concentrates, such as wheat gluten. The term "vegetable protein concentrate" as used herein refers to a material that is extracted or prepared from vegetable matter and that is enriched in protein relative to the original vegetable matter. The term "vegetable protein concentrate" encompasses vegetable protein isolates, such a soy protein isolate.

Protein concentrates may contain substantial quantities of starch. Commercially available gluten preparations, for instance, typically contain around 20 wt.% starch. It is preferred to employ sources of vegetable proteins that have a high protein content and that contain a limited amount of starch. In embodiments wherein vegetable protein concentrates are utilized, the weight ratio of non-animal protein to starch in the meat analogue preferably exceeds 1:1, exceeds 2:1, or even exceeds 3:1.

The meat analogue that is contained in the wet pet food product typically has a fat content of less than 15 wt.%. More preferably, said fat content is in the range of 2 to 12 wt.%, most preferably in the range of 4 to 10 wt.%.

The fat that is contained in the meat analogue preferably contains at least 50 wt.%, more preferably at least 70 wt.% of triglycerides. The fat may suitably contain animal fat, vegetable oil, marine oil and combinations thereof. According to a particularly preferred embodiment, the fat contains at least 10 wt.%, more preferably at least 30 wt.% and most preferably at least 50 wt.% of an animal fat. The animal fat preferably originates from an animal selected from cattle, pigs, sheep, goat, poultry, fish and combinations thereof.

The meat analogue that is present in the wet pet food product may suitably contain animal derived ingredients. Preferably, 0-50 wt.% of the dry matter in the meat analogue is derived from meat and/or animal by-products. More preferably 5-35 wt.%, most preferably 10-25 wt.% of the dry matter in the meat analogue is derived from meat and/or animal by-products.

The water content of the meat analogue typically is at least 40 wt%, more preferably 45-90 wt.% and most preferably 50-85 wt.%. In case the product contains a combination of meat analogue and sauce, the water content and composition of the meat analogue can suitably be determined after the meat analogue piece(s) have been separated from the sauce and the sauce sticking to the piece(s) has been rinsed off with a small quantity of hot water.

The meat analogue may suitably comprise, consist essentially of, or consist of, protein, starch, water, fat and yeast extract. The protein may comprise, consist essentially of, or consist of, protein, starch, water, fat and yeast extract, wherein the protein comprises non-animal protein in an amount of at least 40%

The sauce that is optionally present in the wet pet food product typically contains at least 80 wt.% water. More preferably, the water content of the sauce is in the range of 90-98 wt.%, most preferably in the range of 93-97 wt.%.

The sauce of the wet pet food product preferably is a fluid (gravy), a gel or a mousse. Gelling biopolymers that may suitably be employed to prepare gelled sauce include carrageenan, xanthan, guar gum, cassia gum, starch, gelatine and combinations thereof.

The yeast extract that is employed in the wet pet food product may be obtained from different types of yeast, such as *Saccharomyces, Pichia, Kluyveromyces, Hansenula, Candida.* The yeast extract preferably is obtained from a *Saccharomyces* yeast. Even more preferably, the yeast extract comprises, consists essentially of, or consists of yeast extract obtained from *Saccharomyces cerevisiae.* The yeast extract may comprise, consist of, or consist essentially of, extract from two types of yeast selected from the group consisting of *Saccharomyces, Pichia, Kluyveromyces, Hansenula, Candida.* Or, the yeast extract may comprise, consist essentially of, or consist of, extract from three types of yeast selected from the group consisting of *Saccharomyces, Pichia, Kluyveromyces, Hansenula, Candida.* Or, the yeast extract may comprise, consist essentially of, or consist of extract from four types of yeast selected from the group consisting of *Saccharomyces, Pichia, Kluyveromyces, Hansenula, Candida.* Or, the yeast extract may comprise, consist essentially of, or consist of extract from all five of *Saccharomyces, Pichia, Kluyveromyces, Hansenula, Candida.*

In accordance with another preferred embodiment the yeast extract is obtained from yeast that was produced in a brewing process.

The wet pet food product preferably contains at least 0.2 wt.% yeast extract, or at least 0.4 wt.%, or at least 0.6 wt.%, or at least 0.8 wt.%, or at least 1.0 wt.%, or at least 1.2 wt.% yeast extract. The wet pet food product may contain up to about 3.0 wt.% yeast extract, or up to about 2.8 wt.%, or up to about 2.6 wt.%, or up to about 2.4 wt.% yeast extract. In some embodiments, the wet pet food product may include from 0.2 wt.% to 3.0 wt.%, or from 0.4-2.8 wt.%, or from 0.6 to 2.6 wt.%, or from 0.8 to 2.4 wt.% or from 1.0 wt%-2.4 wt.% of yeast extract.

The wet pet food product preferably contains yeast extract and non-animal protein in a weight ratio in the range of 1:50 to 1:1. More preferably said weight ratio is in the range of 1:20 to 1:2, even more preferably in the range of 1:15 to 1:3. Most preferably the weight ratio is in the range of 1:10 to 1:5.

Other ingredients that may suitably be employed in the wet pet food product, in either the meat analogue, the sauce or both, include fat, antioxidants, carbohydrates, seasoning, colourants, flavouring, minerals, preservatives, vitamins, emulsifiers, farinaceous materials and combinations thereof.

The pet food product typically contains 0.1-1.0 wt.% of taurine, more preferably 0.15-0.5 wt.% of taurine. Taurine is an organic acid widely distributed in animal tissues. Taurine has many fundamental biological roles. Taurine is an essential dietary requirement for cats and dogs, since they cannot synthesize the compound. Taurine supplementation is a requirement of both the European Pet Food Industry Federation (FEDIAF) and the Association of American Feed Control Officials (AAFCO).

Expressed differently, it is preferred that the present pet food product contains 400-2000 mg taurine per 1000 kcal, more preferably 425-1200 mg taurine per 1000 kcal.

The wet pet food product preferably contains added nutrients selected from the group of vitamin B1 (thiamine), vitamin B2 (riboflavin), vitamin B6 (pyridoxine) and combinations thereof. Typically vitamin B1 is contained in the product in a concentration of 0.1-3.0 mg per 1000 kcal. Vitamin B2 is typically present in a concentration of 0.8-2.0 mg per 1000 kcal. Vitamin B6 content is typically in the range of 0.5-0.9 mg per 1000 kcal.

In some embodiments, the wet pet food product comprises, consists essentially of, or consists of a composite meat product, yeast extract and vitamin B1, vitamin B2 and vitamin B6. In others, the wet pet food product may also suitably comprise, consist essentially of, or consist of a composite meat product, a sauce, yeast extract and vitamin B1, vitamin B2 and vitamin B6. In some embodiments, the wet pet food product comprises, consists essentially of, or consists of a composite meat product, yeast extract and two of vitamin B1, vitamin B2 and vitamin B6. In others, the wet pet food product may also suitably comprise, consist essentially of, or consist of a composite meat product, a sauce, yeast extract and two of vitamin B1, vitamin B2 and vitamin B6. In some embodiments, the wet pet food product comprises, consists essentially of, or consists of a composite meat product, yeast extract and one of vitamin B1, vitamin B2 and vitamin B6. In others, the wet pet food product may also suitably comprise, consist essentially of, or consist of a composite meat product, a sauce, yeast extract and one of vitamin B1, vitamin B2 and vitamin B6.

In one preferred embodiment the wet pet food product contains 90-100 wt.% of the meat analogue, more preferably at least 95 wt.% of meat analogue and most preferably at least 98 wt.% of meat analogue.

In another preferred embodiment the wet pet food product is a product containing chunks of meat analogue and a sauce. Preferably, the wet pet food product contains 30-90 wt.% of the meat analogue and 10-70 wt.% of the sauce..

A process of preparing the wet pet food product described herein is also provided, said process comprising preparing a meat analogue by:
- mixing a source of non-animal protein with one or more other pet food components to provide a proteinaceous mass containing 10-40 wt.% non-animal protein, 30-90 wt.% water, and 1-50 wt.% of one or more other edible ingredients;
- heating the proteinaceous mass to a temperature of at least 110°C for 0.1 to 5 minutes to coagulate the non-animal protein; and
- shaping the heated proteinaceous mass into pieces of meat analogue.

The shaping of the heated proteinaceous mass in the present process results in the formation of pieces of meat analogue. These pieces may be regularly shaped or irregularly shaped. The heated proteinaceous mass may be shaped into pieces of similar size or similar shape. However, processes in which the heated proteinaceous mass is shaped into pieces of meat analogue with very different sizes (weights) and/or shapes are also contemplated.

The shaping of the heated proteinaceous mass into pieces of meat analogue may suitably be achieved by expelling the heated proteinaceous mass through a die and cutting or otherwise breaking up the expelled proteinaceous mass, optionally after said proteinaceous mass has been allowed to cool down.

The source of non-animal protein is typically applied in the proteinaceous mass in an amount of at least 15%, more preferably 20-50% by weight and most preferably 25-40% by weight of the (final) proteinaceous mass.

The source of non-animal protein that is employed in the present process preferably contains at least 50% non-animal protein by weight of dry matter. More preferably the source of non-animal protein contains at least 70% non-animal protein by weight of dry matter, most preferably at least 75% non-animal protein by weight of dry matter.

Suitable sources of non-animal protein are vegetable protein concentrates. More preferably, the source of non-animal protein is selected from a cereal protein concentrate, legume protein concentrate and combinations thereof. Even more preferably, the source of non-animal protein is protein concentrate obtained from wheat, corn, pea, soya, rice or from a combination of these vegetables. Most preferably, the source of non-animal protein is selected from gluten, soy protein concentrate, and combinations thereof.

The source of non-animal protein preferably contains not more than a limited amount of starch. Typically, this ingredient contains less than 50%, more preferably less than 30% and most preferably less than 25% starch by weight of non-animal protein.

In the present process yeast extract may be introduced into the proteinaceous mass and/or yeast extract may be introduced into other components of the wet pet food product, e.g. sauce or jelly. The yeast extract employed in the present process typically contains at least 10%, more preferably at least 12% nucleotides by weight of dry matter.

The one or more other pet food components preferably include one or more of meat, animal by-products, antioxidants, carbohydrates, colorants, fats, flavouring top-notes, minerals, preservatives, vitamins, emulsifiers and combinations thereof.

According to a preferred embodiment, the one or more other ingredients that are employed in the preparation of the proteinaceous mass include animal material selected from meat, animal by-product and combinations thereof. Animal by-products are the entire bodies or parts of bodies of animals or products of animal origin not intended for human consumption, including ova, embryos and sperm. Examples of animal by-products include:
- parts of slaughtered animals which are fit for human consumption but are not intended for human consumption for commercial reasons;
- parts of slaughtered animals which are rejected as unfit for human consumption but are not affected by any sign of a communicable disease;
- hides and skins, hooves and horns, pig bristles and feathers originating from animals that are slaughtered in a slaughterhouse and were declared fit for human consumption;
- blood obtained from animals declared fit for human consumption;
- animal by-products derived from the production of products intended for human consumption, including degreased bones and greaves;
- former foodstuffs of animal origin which are no longer intended for human consumption for commercial reasons or due to problems of manufacturing or packaging defects;
- raw milk originating from animals that do not show any signs of a communicable disease;
- fish or other sea animals, except sea mammals, caught in the open sea for the purpose of fishmeal production, and fresh by-products from fish from plants manufacturing fish products for human consumption;
- shells of eggs originating from animals that do not show any signs of a communicable disease;
- blood, hides and skins, hooves, feathers, wool, horns, hair and fur originating from healthy animals.

According to a particularly preferred embodiment, the aforementioned animal material is applied in the proteinaceous mass in an amount that equates to 10-90%, more preferably 30-85% and most preferably 40-80% by weight of the (final) proteinaceous mass.

The animal material employed in the present process preferably has been ground before it is combined with the source of non-animal protein. This ground animal material typically has a pumpable consistency.

The one or more other ingredients that are mixed with the source of non-animal protein preferably include one or more ingredients selected from taurine, vitamin A, vitamin B12, vitamin B3 and combinations thereof. Most preferably, taurine is mixed with the source of non-animal protein and optional other pet food components in the preparation of the proteinaceous mass.

By heating the proteinaceous mass to a temperature of at least 110°C the non-animal protein in the mass can be coagulated to form a firm structure in less than 5 minutes. Typically the pressures employed at these heating temperatures exceed 5 bar. More preferably, the pressure employed is in the range of 6-90 bar. The combination of high temperature and high pressures provide fiber definition to the product.

Preferably the proteinaceous mass is heated in equipment wherein the mass is rapidly heated to elevated temperatures through rapid mechanical heating and/or steam injection.

According to a particularly preferred embodiment, the proteinaceous mass is heated to a temperature of at least 120°C and most preferably of 130-240°C.

While the period of time required for the proteinaceous mass to set sufficiently to form a firm product depends on a number of factors, such as the temperature to which the emulsion is heated and the amount and type of protein in the emulsion, a residence time of 0.5-4 minutes at a temperature of at least 130°C is generally sufficient. Preferably, said residence time is in the range of 1-3 minutes.

After the proteinaceous mass has been heated to coagulate the non-animal protein, the proteinaceous mass is preferably rapidly cooled.

The shaping of the heated mass into pieces of meat analogues may suitably be achieved by allowing the non-animal protein to coagulate and the proteinaceous mass to set while the proteinaceous mass is passed through a tube. The proteinaceous mass exiting from the tube may be cut or otherwise divided into a pieces of meat analogue, preferably after the proteinaceous mass has been cooled to a temperature of less than 101°C.

The pieces of meat analogue thus formed have excellent integrity and strength and retain their shape and fiber characteristics when subjected to commercial canning and retorting procedures.

To enhance the fibrous appearance of the pieces of meat analogue, a set of compression rolls, which consists of two long lightly-textured cylinders (rolls) that spin at similar speeds, can be used prior to final product resizing or dicing. Pieces of meat analogue can be dropped into a narrow adjustable opening between the spinning cylinders, which open up, or partially separate or tear the fibers. This incomplete shredding emphasizes the linear fibers.

After the heated proteinaceous mass has been shaped into pieces of meat analogue, the size of these pieces may be reduced further by e.g. shredding or milling. Especially in case the process is used to prepare a wet pet food product that contains meat analogue as well as sauce, it is preferred to employ an additional size reduction step in which the size of the pieces of meat analogue is reduced by at least a factor 2, more preferably by at least a factor 4.

The proteinaceous mass that is produced in the mixing step of the present process preferably contains at least 15 wt.% of non-animal protein, more preferably 18-40 wt.% of non-animal protein and most preferably 20-35 wt.% of non-animal protein. The total protein content of the proteinaceous mass preferably lies in the range of 15-50 wt.%, more preferably of 20-42 wt.% and most preferably of 25-38 wt.%.

The proteinaceous mass obtained in the mixing step typically has a water content of at least 40 wt.%. More preferably, the water content of said proteinaceous mass in the range of 45-80 wt.%, most preferably in the range of .50-75 wt.%.

In one preferred embodiment of the present process, the source of non-animal protein is mixed with yeast extract in the preparation of a proteinaceous mass containing at least 0.1 wt.% yeast extract, more preferably at least 0.2 wt.% yeast extract. Even more preferably, the proteinaceous mass so produced contains 0.4-3 wt.% of yeast extract, yet more preferably 0.8-2.8 wt.% of yeast extract, and most preferably 1.2-2.4 wt.% of yeast extract.

The pieces of meat analogue obtained in accordance with this embodiment may suitably be shaped in the form of a loaf (or pate) product that is subsequently packaged as a single piece in a container, such as a can, a pouch or a tray. Typically, these shaped pieces of meat analogue have a piece volume of 20-2,000 cm³, more preferably of 40-1,500 cm³, most preferably of 50-1,000 cm³. Alternatively, the pieces of meat analogue may be combined with sauce to prepare a chunks-and-gravy or a chunks-and-jelly type of product. After packaging, the aforementioned products are preferably sterilized within the package, e.g. by retort sterilization.

According to another preferred embodiment, the present process further comprises the step of combining the pieces of meat analogue with a sauce to produce a wet pet food product, said sauce containing at least 0.1 wt.% of yeast extract, more preferably at least 0.2 wt.% of yeast extract, even more preferably 0.4-4.5 wt.% of yeast extract, yet more preferably 0.8-4.0 wt.% of yeast extract, and most preferably 1.2-3.5 wt.% of yeast extract. Also this product is preferably sterilized within the package, e.g. by retort sterilization.

Typically, a retorting temperature of 115°C to 130°C for approximately 20 to 120 minutes is satisfactory in producing a commercially sterile product.

The sauce employed in the process preferably is the sauce component of the wet pet food product as defined herein before.

The use of the wet pet food product provided herein for feeding a companion animal, especially a companion animal selected from cats and dogs, is also contemplated. In some embodiments, the wet pet food product is used to feed a cat.

Some embodiments will now be described in detail in the following non-limiting examples.

### Example 1

Meat analogues for a wet cat food product were prepared on the basis of the recipe shown in Table 1

**Table 1**

| **Ingredient** | **Wt.%** |
|---|---|
| Animal by-products ¹ | 71.71 |
| Calcium carbonate | 0.75 |
| Minerals | 0.54 |
| Wheat gluten ² | 27.00 |

| | |
|---|---|
| ¹ protein content appr. 17 wt.% ² protein content appr. 75 wt.%; starch content 5-15 wt.% | |

The nutritional composition of the meat analogue prepared on the basis of this recipe is depicted in Table 2.

**Table 2**

| **Ingredient** | **Wt.%** |
|---|---|
| Protein | 31.4 |
| Fat | 4.7 |
| Carbohydrate | 3.5 |
| Water | 56.9 |
| Remainder | 3.4 |

The meat analogue was prepared by grinding the frozen animal by-products. After grinding, the mix of meat particles was conveyed to a mixing tank in which the meat was mixed until uniform, and was heated to facilitate pumping of the meat mix. The uniform mix of ground meat particles was then comminuted under conditions which emulsify the meat material and form a meat emulsion in which the protein and water of the meat mixture form a matrix that encapsulates the fat globules.

The temperature of the meat mixture during emulsification was maintained below 50°C in order to minimize protein denaturation. The wheat protein, calcium carbonate and minerals were added to the meat mix after emulsification of the meat.

The viscous meat emulsion so obtained had a temperature of about 35 °C, and was heated in a twin-screw extruder to about 136°C.

The hot meat emulsion, was transferred with a positive displacement pump to a holding tube. The product was pumped at a pressure in excess of 7 bar into the processing zone. The emulsion was retained in the holding tube at a pressure above the vapor pressure of the emulsion until the protein in the meat emulsion had coagulated sufficiently to set the emulsion and form a firm emulsion product, which retained its shape and structure when discharged from the holding tube.

The set meat emulsion discharged from the confined processing zone had a temperature of 98-100 °C and was cut suing a rotary cut-off knife that was mounted at the discharge end of the holding tube. Upon discharge from the processing zone, the chunks of meat analogue were rapidly cooled by evaporating cooling to a temperature in the range of about 88°C and were allowed to cool down to ambient temperature.

Next, the chunks of meat analogue were combined with two different jellies having the composition described in Table 3.

**Table 3**

| | **Wt.%** | |
|---|---|---|
| **Ingredient** | **Control** | **Product 1** |
| Water | 98.6 | 96.3 |
| Yeast extract | 0 | 2.3 |
| Thickening agent | 0.95 | 0.95 |
| Vitamin/nutrient mixture | 0.44 | 0.44 |

The composition of the vitamin/nutrient mixture, by weight of the final product, is shown in Table 4.

**Table 4**

| **Vitamins *&* nutrients** | **Mg/kg** |
|---|---|
| Taurine | 700 |
| Thiamine | 29.4 |
| Riboflavin | 1.5 |
| Pyridoxine | 4.9 |

The chunks of meat analogue and the jellies were introduced into pouches in a weight ratio of 35:65 and retort sterilised to an Fₒ value in the range of 40 to 60.

When the sterilized product was carefully separated into a meat analogue component and sauce component, it was found that the meat analogue component constituted about 60 wt.% of the sterilized product and the sauce component about 40 wt.% of the sterilized product.

### Example 2

A feeding trial was conducted with the two wet cat food products (Product 1 and Control) of Example 1. In these feeding trials called "two-bowl test" or "versus test" the two products were presented simultaneously to a group of cats. Identical amounts of product were served in each of the two bowls. In the feeding trials the cats were twice exposed to the two products. The position of the two bowls was switched in the second exposure to avoid any bias. The quantity eaten was measured after a single meal exposure. Statistical analyses (Analysis of variance) were made on the data to determine the statistical significance of the observed differences. The outcome of the feeding trial is summarized in Table 5.

**Table 5**

| **Variable** | **Control** | **Product 1** | **p-value** |
|---|---|---|---|
| Consumed (g) | 23.7 | 66.1 | <0.0001 |

### Example 3

Example 1 was repeated, except that this time the meat analogue was prepared on the basis of the recipe shown in Table 6.

**Table 6**

| **Ingredient** | **Wt.%** |
|---|---|
| Animal by-product | 46.45 |
| Water | 19.32 |
| Calcium carbonate | 0.75 |
| Minerals | 0.54 |
| Wheat gluten | 32.94 |

Chunk and jelly products were prepared using the same jellies as in Example 1, i.e. a jelly containing yeast extract (Product 2) and a jelly without yeast extract (Control).

A feeding trials was conducted with these two products (Product 2 and Control) using the "two-bowl test" described in Example 2. The outcome of the feeding trial is summarized in Table 7.

**Table 7**

| **Variable** | **Control** | **Product 2** | **p-value** |
|---|---|---|---|
| Consumed (g) | 17.4 | 77.3 | <0.0001 |

### Example 4

Example 1 was repeated, except that this time the meat analogue was prepared on the basis of the recipe shown in Table 8.

**Table 8**

| **Ingredient** | **Wt.%** |
|---|---|
| Animal by-product | 31.24 |
| Water | 30.98 |
| Calcium carbonate | 0.75 |
| Minerals | 0.54 |
| Wheat gluten | 36.50 |

Chunk and jelly products were prepared using the same jellies as in Example 1, i.e. a jelly containing yeast extract (Product 3) and a jelly without yeast extract (Control).

A feeding trials was conducted with these two products (Product 3 and Control) using the "two-bowl test" described in Example 2. The outcome of the feeding trial is summarized in Table 9.

**Table 9**

| **Variable** | **Control** | **Product 3** | **p-value** |
|---|---|---|---|
| Consumed (g) | 2.3 | 55.6 | <0.0001 |

It can be deduced from the data presented in Tables 5, 7 and 9 that the preference of cats for the wet pet food products containing yeast extract strongly increased with increasing vegetable protein content as shown in Table 10.

**Table 10**

| | **Ratio amount eaten vs. control** |
|---|---|
| Product 1 | 2.8 |
| Product 2 | 4.4 |
| Product 3 | 24.2 |

The disclosure also relates to the following numbered embodiments:
1. A wet pet food product comprising 20-100 wt.% of meat analogue and 0-80 wt.% of a sauce, said meat analogue comprising:
   - 10-60 wt.% protein, at least 40 wt.% of said protein being non-animal protein;
   - 30-90 wt.% water;
   - 0-15 wt.% starch;
   - 0-20 wt.% fat;
   wherein, when the meat analogue contains starch, non-animal protein and starch are present in the meat analogue in a weight ratio of non-animal protein to starch that exceeds 1:3; and wherein the wet food product contains 0.1-3 wt.% of yeast extract.
2. The wet pet food product of embodiment 1, wherein the meat analogue contains at least 15 wt.% non-animal protein.
3. The wet pet food product of embodiment 1 or 2, wherein the non-animal protein is selected from vegetable protein, microbial protein, algal protein, egg protein, milk protein, insect protein and combinations thereof.
4. The wet pet food product of embodiment 3, wherein the non-animal protein is vegetable protein.
5. The wet pet food product of embodiment 4, wherein the vegetable protein is selected from cereal protein, legume protein and combinations thereof.
6. The wet pet food product according to any one of the preceding embodiments, wherein the meat analogue contains yeast extract and non-animal protein in a weight ratio in the range of 1:10 to 1:1.
7. The wet pet food product according to any one of the preceding embodiments, wherein the meat analogue contains 2-12 wt.% fat.
8. The wet pet food product, according to any one of the preceding embodiments, wherein the pet food product contains 30-90 wt.% of the meat analogue and 10-70 wt.% of the sauce, wherein the sauce contains 0.3-5 wt.% of yeast extract.
9. The wet pet food product of embodiment 8, wherein the sauce is a fluid, a gel or a mousse.
10. A process of preparing a wet pet food product according to any one of the preceding embodiments, said process comprising preparing a meat analogue by:
   - mixing a source of non-animal protein with one or more other pet food components to provide a proteinaceous mass containing 10-40 wt.% non-animal protein, 30-90 wt.% water and 1-50 wt.% of one or more other edible ingredients;
   - heating the proteinaceous mass to a temperature of at least 110°C for 0.1-5 minutes to coagulate the non-animal protein; and
   - shaping the heated mass into pieces of meat analogue.
11. The process of embodiment 10, wherein the source of non-animal protein contains at least 15% non-animal protein by weight of dry matter.
12. The process of embodiment 10 or 11, wherein the source of non-animal protein is mixed with yeast extract in the preparation of a proteinaceous mass containing at least 0.1 wt.% yeast extract.
13. The process of embodiment 12, wherein the process further comprises combining the pieces of meat analogue with a sauce containing at least 0.1 wt.% yeast extract.
14. The process of embodiment 13, wherein the one or more other ingredients that are employed in the preparation of the proteinaceous mass include animal material selected from meat, animal by-product and combinations thereof.
15. Use of a wet pet food according to any one of embodiments 1-9 for feeding a companion animal, preferably a companion animal selected from cats and dogs.
16. The wet pet food product of embodiment 1, wherein the yeast extract is an extract from two or more types of yeast selected from the group consisting of *Saccharomyces, Pichia, Kluyveromyces, Hansenula, Candida.*
17. The wet pet food product of embodiment 16, wherein the yeast extract is from Saccharomyces and at least one other yeast.
18. The wet pet food product of embodiment 1, wherein the yeast extract is an extract of *Saccharomyces cerevisiae.*

## Claims

1. A wet pet food product comprising a meat analogue and yeast extract; wherein the term "yeast extract" refers to a yeast product made by extracting the cell contents from yeast by removing the cell walls.

2. The wet pet food product according to claim 1, wherein the wet pet food product comprises at least 15 wt.% non-animal protein, more preferably at least 18-40 wt.% non-animal protein, most preferably at least 20-35 wt.% non-animal protein.

3. The wet pet food product according to claim 1 or 2, wherein the meat analogue comprises at least 40% non-animal protein by weight of the total protein contained in the meat analogue.

4. The wet pet food product according to any preceding claim, wherein the wet pet food product contains yeast extract and non-animal protein in a weight ratio in the range of 1:50 to 1:1 or 1:20 to 1:2 or 1:15 to 1:3 or 1:10 to 1:5.

5. The wet pet food product according to any preceding claim, wherein the wet pet food product further comprises a sauce.

6. The wet pet food product according to any preceding claim, wherein the wet pet food product comprises 20-100 wt.% of meat analogue, 0-80 wt.% of sauce and 0.1-3 wt.% of yeast extract.

7. The wet pet food product according to any preceding claim, wherein the wet pet food product comprises 90-100 wt.% of the meat analogue, preferably at least 95 wt.% of the meat analogue, more preferably at least 98 wt.% of the meat analogue.

8. The wet pet food product according to any of claims 1 to 7, wherein the wet pet food product comprises 30-90 wt.% of the meat analogue and 10-70 wt.% of the sauce.

9. The wet pet food product of any preceding claim, wherein the wet pet food product comprises 0.2 wt.% to 3.0 wt.% of yeast extract.

10. A process of preparing a wet pet food product according to any one of the preceding claims, said process comprising preparing a meat analogue by:
a. Mixing a source of non-animal protein with one or more other pet food components to provide a proteinaceous mass containing 10-40 wt.% non-animal protein, 30-90 wt.% water, and 1-50 wt.% of one or more other edible ingredients
b. heating the proteinaceous mass to a temperature of at least 110°C for 0.1 to 5 minutes to coagulate the non-animal protein; and
c. shaping the heated proteinaceous mass into pieces of meat analogue.

11. The process according to claim 10, wherein the source of non-animal protein is mixed with yeast extract in the preparation of a proteinaceous mass containing at least 0.1 wt.% yeast extract, more preferably at least 0.2 wt.% yeast extract.

12. The process according to claim 10 or 11, wherein the process further comprises the step of combining the pieces of meat analogue with a sauce containing at least 0.1 wt.% of yeast extract.

13. Use of a wet pet food product according to any one of claims 1 to 9 for feeding a companion animal, preferably a companion animal selected from cats and dogs.
